# EUROPÄISCHE PATENTSCHRIFT

(11) **EP 3 026 187 B1**
(45) Veröffentlichungstag und Bekanntmachung des Hinweises auf die Patenterteilung: **15.03.2017**
(21) Anmeldenummer: 15202835.3
(22) Anmeldetag: 20.02.2014
(51) Int. Cl.: E04D 1/34, B65D 73/02, E04D 15/02, F16B 15/08, F16B 11/00

(54) **DACHHAKENSTREIFEN**
ROOF HOOK STRIP
BANDES DE CROCHETS DE TOITURE

(43) Veröffentlichungstag der Anmeldung: 01.06.2016
(62) Teilanmeldung aus: 14155998.9
(73) Patentinhaber: Raimund Beck Nageltechnik GmbH, 5270 Mauerkirchen (AT)
(72) Erfinder: Siemers, Stefan, 84489 Burghausen (DE)
(74) Vertreter: Albrecht, Ralf

(56) Entgegenhaltungen:
- WO-A1-2004/097139
- CN-U- 202 316 872
- FR-A- 1 367 956
- FR-A3- 2 741 323

## Beschreibung

Die vorliegende Erfindung betrifft einen Dachhakenstreifen für ein Nagelsetzgerät nach dem Oberbegriff von Anspruch 1.

Es ist seit langem bekannt, Dachhaken für die Befestigung von Dach- oder Fassadenplatten einzusetzen. Insbesondere Schieferplatten werden mittels solcher Dachhaken an Fassaden oder bei Dacheindeckung an einer Dachfläche befestigt. Die Verwendung von Dachhaken hat sich etabliert, da mit dieser Befestigungsart Schieferschindeln zur Befestigung mit einem Nagel nicht mehr durchbohrt werden müssen und so auch bei Sturmbeanspruchung kein Ausschlagen des Bohrungsloches durch einen Befestigungsnagel zu befürchten ist.

Zur Befestigung der Schieferschindeln weist der Dachhaken dazu meist an einer Seite eine zum Schaft des Dachhakens abgewinkelte Einschlagspitze auf und an dem anderen freien Ende eine Aufnahme beispielsweise in Form einer Klammer. Bei der Montage der Schieferschindeln wird zunächst der Dachhaken über die Einschlagspitze mit einem Hammer in die jeweiligen Dachlatten an die Dachfläche genagelt. Gegebenenfalls wird anschließend zur Sicherung der zu montierenden Schieferplatte ein zweiter Dachhaken in die Dachlatte eingebracht. Schließlich wird die zu montierende Schieferplatte in die Klammer bzw. Klammern der Dachhakeneingehängt und darin fixiert.

Oftmals werden aufwendige Schieferdächer an Gebäuden mit steilen Dächern wie beispielsweise Kirchtürmen verbaut. Ein Dachdecker muss somit auf sehr unwegsamem Terrain, was ein Fixieren der Dachhaken gemäß der oben genannten Vorgehensweise, d.h. unter Nutzung beider Hände sehr erschwert. Hinzu kommt die Tatsache, dass die Einschlaghaken bei loser Schüttung sich in dafür vorgesehenen Vorratsbehältern wie beispielsweise in einer Tasche des Dachdeckers ineinander und miteinander verhaken, was die Handhabung auf einem steilen Dach deutlich erschwert. Auch die Einschlagspitzen stellen bei der Entnahme aus der Tasche oder dem Vorratsbehälter eine erhöhte Verletzungsgefahr dar.

Um dieser Problematik entgegenzutreten, wurde im Stand der Technik bereits vorgeschlagen, die Dachhaken mittels einfacher Papierstreifen quer zueinander ausgerichtet zu positionieren oder in einer Pappverpackung anzuordnen, um so eine Magazinierung der Dachhaken vorzunehmen. Allerdings erweisen sich die beispielsweise in der WO 2004/097139 A1 gezeigten Lösungsvorschläge als relativ aufwendig. Dabei ist es weiterhin notwendig, zur Entnahme und Vereinzelung eines Dachhakens beide Hände zu benutzen.

Zur Vereinfachung der Handhabung wurde beispielsweise in der DE 20 2010 013 148 U1 offenbart, Dachhaken mittels Setzmaschinen in die Dachlatten bzw. den Dachfirst einzuschlagen. Dazu ist es ebenfalls notwendig, die Dachhaken zu magazinieren. Dies erfolgt gemäß diesem Stand der Technik über an den Dachhaken vorgesehene Querstege, über die die Dachhaken miteinander verbunden sind. Beim Einschlagen mittels einer Setzmaschine wird jeweils der erste Einschlaghaken von dem Verbund abgebrochen, wobei die Querstege an den vereinzelten Dachhaken verbleiben. Die in dem Dokument offenbarten Dachhaken sind aus Kunststoff hergestellt und müssen zur Verbesserung der Schlagfestigkeit mit einer Drahteinlage verstärkt werden, um in handelsüblichen Setzgeräten eingesetzt werden zu können. Daraus resultiert eine relativ kostenintensive Herstellung. Ferner besteht die Problematik, dass durch Vorsehen der Querstege die Packungsdichte der Dachhakenmagazine relativ gering ist, was dazu führt, dass das Setzgerät auch auf dem Dach durch den Arbeiter häufig neu befüllt werden muss, was sowohl die Handhabung erschwert als auch die Effektivität der vorgenommenen Arbeiten verringert.

Um diesem Problem zu begegnen, ist im Stand der Technik offenbart, die den Dachhakenstreifen bildenden Dachhaken im Wesentlich einander berührend anzuordnen und miteinander zu verkleben. So wird erreicht, dass eine gleichbleibende Größe und damit Handhabbarkeit des Setzgerätes, letzteres mit einer wesentlich höheren Anzahl an Dachhaken pro Magazin bestückt werden kann und somit eine Neubeladung des Magazins des Setzgerätes zu einem wesentlich späteren Zeitpunkt erfolgen kann.

Es hat sich jedoch in der Praxis gezeigt, dass bei der Herstellung der Dachhaken insbesondere im Schaftbereich bei der Fertigung der Einschlagspitzen der Dachhaken häufig Grate entstehen. Bei der Anordnung zu Dachhakenstreifen addieren sich die an den Spitzen ausgebildeten Grate so ungünstig, dass sich der Dachstreifen nicht gerade ausbringen lässt.

Ein Dachhakenstreifen der eingangs genannten Art ist aus der FR 2 741 323 A3 bekannt. Dieser ist aus mehreren berührend miteinander lösbar verbundenen magazinierten Dachhaken gebildet. Diese Dachhaken besitzen jeweils eine Basis, an deren einem Endbereich eine Aufnahme ausgebildet und an deren anderem Endbereich eine zu der Basis abgewinkelt angeordnete Einschlagspitze mit einem Einschlagabschnitt und einem Schaftabschnitt ausgebildet ist. Die Dachhaken sind miteinander verklebt, wobei benachbarte Einschlagabschnitte jeweils leicht versetzt zueinander angeordnet sind. Konkret liegen die Einschlagabschnitte alternierend auf und unterhalb einer Ebene, die durch die Schaftabschnitte gebildet wird.

Es ist daher Aufgabe der vorliegenden Erfindung, einen Dachhakenstreifen bereitzustellen, der eine zeiteffektive und einfache Handhabung bei gleichzeitig zuverlässiger Befestigung von Dach- oder Fassadenplatten kostengünstig ermöglicht.

Diese Aufgabe ist bei einem Dachhakenstreifen der eingangs genannten Art durch die kennzeichnenden Merkmale von Anspruch 1 gelöst. Zur Verringerung der Materialkosten und des Gewichts der Dachhakenstreifen wird erfindungsgemäß zur Verklebung der Dachhaken nur ein zwischen benachbarten Einschlagspitzen gebildeter Berührungsbereich zumindest teilweise mit dem polymeren Bindemittel oder einem Klebstoff oder einem Klebestreifen umhüllt, wobei insbesondere jeweils nur einer der den Berührungsbereich bildenden Einschlagabschnitte das polymere Bindemittel oder den Klebstoff oder den Klebestreifen aufweist. Natürlich ist es auch denkbar, mehrere Bereiche oder gar die Dachhaken komplett mit dem polymeren Bindemittel oder Klebstoff zu umhüllen, jedoch bietet es sich an, nur eine Seite des Berührungsbereichs mit Klebstoff oder polymerem Bindemittel zu versehen, um die Abstände zwischen den Dachhaken möglichst gering zu halten.

Dadurch, dass benachbarte Einschlagabschnitte jeweils leicht versetzt zueinander angeordnet sind, wird erreicht, dass die den Dachhakenstreifen bildenden Dachhaken eine gegenüber dem Stand der Technik verbesserte Packungsdichte aufweisen, da sie im Wesentlichen einander berührend aneinander angeordnet und miteinander verklebt sind und gleichzeitig einer eventuellen Gratbildung begegnet werden, da durch die versetzte Anordnung der Einschlagabschnitte die Grate keine zusätzliche Beabstandung der Dachhaken voneinander im Bereich der Einschlagspitze hervorrufen. So wird erreicht, dass bei gleichbleibender Größe und damit Handhabbarkeit des Setzgerätes letzteres mit einer wesentlich höheren Anzahl an Dachhaken pro Magazinierung bestückt werden kann und somit eine Neubeladung des Magazins des Setzgerätes zu einem wesentlich späteren Zeitpunkt erfolgen kann. Dies verbessert das Arbeitstempo des Dachdeckers und verringert somit effektiv die Kosten für die Eindeckung eines Dachs bei gleichzeitiger Verbesserung der Sicherheit des Arbeiters. Auch kann eine möglichst ebene Ausrichtung des Dachhakenstreifens erreicht werden.

Werden die Dachhaken aus einem Biegedraht hergestellt, so ist es möglich, die Form der Dachhaken zunächst in einem Biegeautomaten auf übliche Weise, insbesondere paarweise zu generieren und im Anschluss zueinander versetzt auszurichten und über das polymere Bindemittel oder den Klebstoff miteinander zumindest teilweise zu verkleben. Es ist so nicht mehr notwendig, die Dachhaken in einem aufwendigen Spritzgussprozess unter Einlage eines Verstärkungsdrahtes zu fertigen.

Um eine möglichst homogene Ausbildung des Dachhakenstreifens zu erreichen und so eine gerade Ausbringung des Dachhakenstreifens aus einem Nagelsetzgerät zu begünstigen, kann es vorteilhaft sein, dass die Schaftabschnitte eine Ebene definieren, entlang welcher die benachbarten Einschlagabschnitte versetzt zueinander angeordnet sind. Dabei können die Einschlagabschnitte alternierend auf und oberhalb der durch die Schaftabschnitte gebildeten Ebene angeordnet sein oder auf und unterhalb letzterer oder aber auch alternierend oberhalb und unterhalb der Ebene.

Eine besonders vorteilhafte Ausführungsform der vorliegenden Erfindung sieht vor, dass zwei benachbarte Einschlagabschnitte zwischen sich einen Winkel von 0,1° bis 10°, bevorzugt 0,5° bis 5°, noch bevorzugter 2° bis 4° einschließen. Hierdurch wird gewährleistet, dass die an den Einschlagspitzen befindlichen Grate keinen Einfluss mehr auf die Abstände zwischen den Dachhaken haben, sondern leicht oberhalb oder unterhalb der anschließenden Einschlagspitze angeordnet sind, so keinen Einfluss auf die Längserstreckung des Dachhakenstreifens mehr haben.

Eine besonders zuverlässige Verbindung der Dachhaken zu einem Dachhakenstreifen ist gegeben, wenn das polymere Bindemittel durch einen Kontaktklebstoff, insbesondere einen Klebelack gebildet ist, der insbesondere gute Adhäsionseigenschaften auf Metalloberflächen aufweist.

Sollten die Dachhaken aus einem anderen Werkstoff hergestellt sein, so ist es natürlich auch möglich, das polymere Bindemittel oder den Klebstoff derart zu modifizieren, dass seine Adhäsionseigenschaften optimal auf die Oberfläche der Dachhaken abgestimmt sind. Dies kann notwendig sein, wenn der Dachhaken beispielsweise als Korrosionsschutz mit einer Beschichtung versehen ist.

Überraschenderweise hat sich herausgestellt, dass sich die Ausziehwerte der Dachhaken durch bestimmte Arten von Füllkörpern in besonders vorteilhafter Weise steigern lassen. Vorteilhaft ist es jedoch in jedem Fall, dass das polymere Bindemittel nebst Füllkörpern im Bereich der Einschlagspitze, insbesondere der Einschlagabschnitte, aufgebracht ist.

So können die Ausziehwerte von Dachhaken speziell durch sphärische oder hemisphärische Füllkörper in besonderer Weise gesteigert werden. Bevorzugte Ausführungsformen des erfindungsgemäßen Dachhakens besteht demnach darin, dass die Füllkörper zumindest teilweise eine sphärische oder hemisphärische Form aufweisen und insbesondere ausgewählt sind aus Kunststoff-Mikrohohlkugeln, Kunststoff-Mikrokugeln, Glas-Mikrohohlkugeln, Glas-Mikrokugeln, keramischen Mikrokugeln oder keramischen Mikrohohlkugeln oder aus Mischungen von diesen, wobei die Zusammensetzung vorzugsweise im Bereich der Einschlagspitze aufgebracht ist.

Für die erfindungsgemäße Zusammensetzung kann eine Vielzahl unterschiedlicher Füllkörpern verwendet werden, wie beispielsweise partikuläre, schichtartige oder faserartige Füllkörper sowie auch Mischungen aus den vorgenannten Füllkörpern.

Um einen erfindungsgemäßen Dachhakenstreifen auf besonders einfache Weise herzustellen, bietet sich folgende Verfahrensweise zur Befestigung von Dach- oder Fassadenplatten an einer Dachfläche an, wobei die Dachhaken jeweils eine Basis aufweisen, an deren einem Endbereich eine Aufnahme zur Haltung der Dach- oder Fassadenplatten, insbesondere von Schieferplatten an einer Dachfläche, und an deren anderem Endbereich eine zu der Basis abgewinkelt angeordnete Einschlagspitze mit einem Einschlagabschnitt und einem Schaftabschnitt ausgebildet sind, die Schritte umfassend:
Ablängen mindestens zweier Drähte auf eine vorher festzulegende Gesamtlänge;
Biegen der Drähte zu Dachhakenpaaren unter Bildung der Aufnahme, wobei die jeweiligen Einschlagspitzen derart gebogen werden, dass zumindest deren Einschlagabschnitte versetzt zueinander angeordnet sind;
Ausrichten der Dachhakenpaare in berührender Weise aneinander; und
Verkleben der Dachhaken durch partielles Auftragen eines polymeren Bindemittels oder eines Klebstoffes oder eines Klebebandes in einem zwischen benachbarten Einschlagabschnitten gebildeten Berührungsbereich zur Bildung des Dachhakenstreifens.

Ein solches Verfahren zur Herstellung eines erfindungsgemäßen Dachnagelstreifens kann beispielsweise mit einem herkömmlichen Biegeautomat erfolgen, wobei der Biegeautomat insbesondere mit einer Magazinierungs- und Verklebungseinheit gegenüber dem Stand der Technik erweitert sein kann.

Dabei werden jeweils mindestens zwei Dachhaken vom Biegeautomaten gleichzeitig gebogen und anschließend so ausgeworfen, dass die Dachhakenpaare parallel zueinander ausgerichtet möglichst berührend aneinander in einer Einheit zur Magazinierung eines Dachhakenstreifens angeordnet sind.

Eine solche Biegemaschine ermöglicht es natürlich, Dachhaken unterschiedlicher Länge durch einfache Programmierung herzustellen, insbesondere Dachhaken mit einer Länge zwischen 50 und 200 mm, bevorzugt zwischen 70 und 120 mm herzustellen.

Werden die Dachhaken in einem anschließenden Verfahrensschritt über ein polymeres Bindemittel bzw. einen Klebelack miteinander lösbar verklebt und ist die Verklebung ausgehärtet, so können die so gebildeten Dachhakenstreifen in Setzgeräte eingesetzt werden und dann beispielsweise über einen Pneumatikkolben aus dem Setzgerät in das Holz des Dachstuhls eingetrieben werden.

Eine besonders schnelle Herstellung des Dachhakenstreifens wird durch einen Biegeautomat unter Verwendung des erfindungsgemäßen Verfahrens erreicht.

Weitere vorteilhafte Ausgestaltungen der vorliegenden Erfindung sind den Unteransprüchen und den nachfolgenden Zeichnungen zu entnehmen. Darin zeigen
- Figur 1: eine schematische Darstellung eines einfachen Dachhakens;
- Figur 2: eine perspektivische Teildarstellung eines erfindungsgemäßen Dachhakenstreifens mit versetzt zueinander angeordneten Dachhaken.

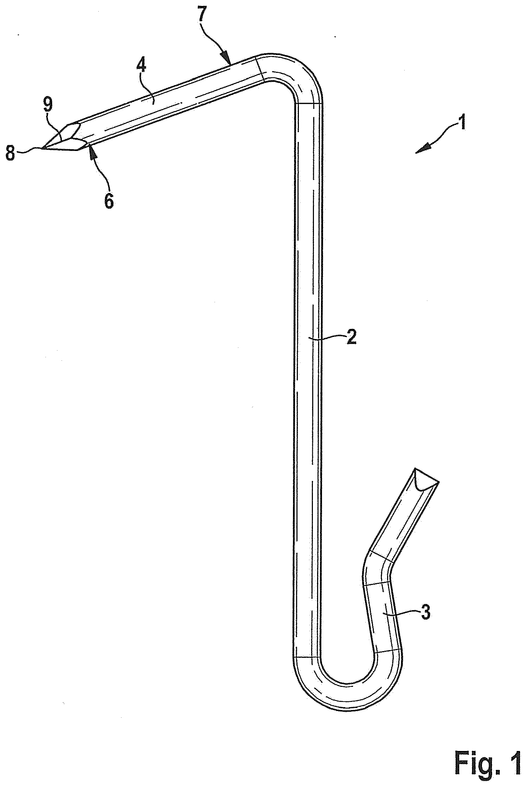

In der Figur 1 ist ein Dachhaken 1 gemäß dem Stand der Technik gezeigt. Der Dachhaken 1 weist eine Basis 2 auf, an deren einem Endbereich eine Aufnahme 3 zur Halterung von Dach- oder Fassadenplatten ausgebildet ist. Der andere Endbereich des Dachhakens 1 ist mit einer zu der Basis 2 abgewinkelt angeordneten Einschlagspitze 4 versehen. Die Aufnahme 3 ist hier in Form eines gebogenen Hakens gezeigt. In einem nicht dargestellten Ausführungsbeispiel ist die Aufnahme so ausgebildet, dass sie sich an den Kantenbereich der Dach- oder Fassadenplatten anschmiegt und insbesondere einen Vorsprung aufweist, der in eine in der Fassaden- oder Dachplatte ausgebildete Nut eingreift, um so einem ungewollten Verrutschen der Dach- oder Fassadenplatte beispielsweise bei Auftreten von äußeren Kräften wie durch Sturm entgegenzuwirken. Die Einschlagspitze 4 weist einen Einschlagabschnitt 6 mit einer Spitze 8 sowie einen Schaftabschnitt 7 auf.

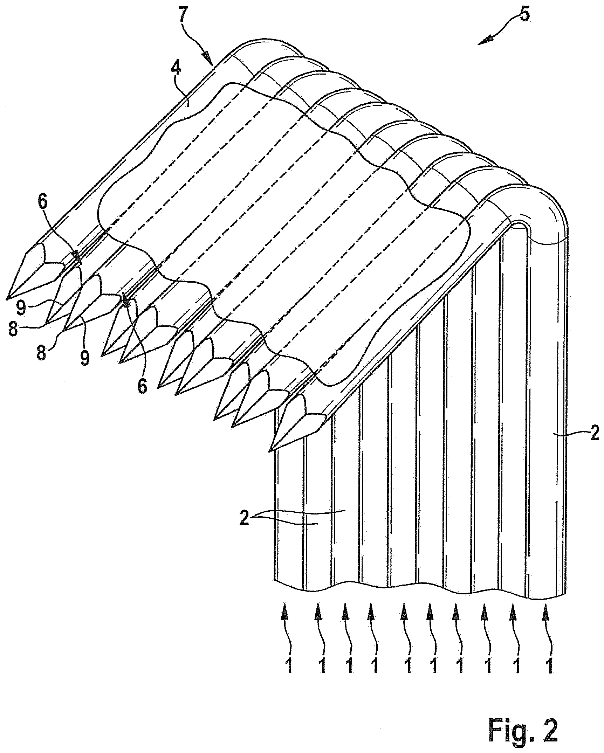

Die Figur 2 zeigt eine Teildarstellung eines erfindungsgemäßen Dachhakenstreifens 5. Der Dachhakenstreifen 5 weist ebenfalls mehrere Dachhaken 1 auf mit jeweils einer Basis 2, an deren einem Endbereich eine Aufnahme 3 zur Halterung von Dach- oder Fassadenplatten vorgesehen ist, und an deren anderem Endbereich eine zu der Basis 2 abgewinkelt angeordnete Einschlagspitze 4 mit einem Einschlagabschnitt 6 und einem Schaftabschnitt 7 ausgebildet ist. Die Dachhaken 1 sind als Dachhakenpaare gebogen, wobei die Dachhakenpaare über ein polymeres Bindemittel miteinander verklebt sind.

Wie der Figur 2 näher zu entnehmen ist, sind benachbarte Einschlagabschnitte 6 jeweils leicht versetzt zueinander angeordnet. Die Versetzung der Einschlagabschnitte 6, insbesondere der an den Einschlagabschnitten 6 ausgebildeten Spitzen 8 wird dadurch erreicht, dass zwei benachbarte Einschlagabschnitte 6 zwischen sich einen Winkel von ca. 5° einschließen, d.h. sie sind mit einer leichten Winkelabweichung zueinander vorne abgebogen, so dass an den Spitzen 8 bei der Fertigung entstehende Grate 9 nicht miteinander oder aneinander zur Anlage kommen. Hierdurch wird erreicht, dass die erfindungsgemäßen Dachhakenstreifen 5 gegenüber dem Stand der Technik eine verbesserte Packungsdichte aufweisen und eine im Wesentlichen gerade Ausbringung des Dachhakenstreifens 5 möglich ist. Die Einschlagabschnitte 6 sind dazu alternierend auf und unterhalb der durch die Schaftabschnitte 7 gebildeten Ebene angeordnet.

Eine weitere Verbesserung der Packungsdichte des Dachhakenstreifens 5 ist dadurch erreicht, dass zur Verklebung der Dachhaken 1 ein zwischen den benachbarten Einschlagabschnitten 6 gebildete Berührungsbereich B nur teilweise insbesondere einseitig mit einem polymeren Bindemittel oder einem Klebstoff versehen ist, d.h. dass der Lack nur einseitig im Bereich der Einschlagspitze 4 aufgetragen ist.

Ein erfindungsgemäßes Verfahren zur Herstellung eines Dachhakenstreifens 5 umfasst die Schritte:
Ablängen mindestens zweier Drähte auf eine vorher festzulegende Gesamtlänge;
Biegen der Drähte zu Dachhakenpaaren unter Bildung der Aufnahmen 3, wobei die jeweiligen Einschlagspitzen 4 derart gebogen werden, dass zumindest deren Einschlagabschnitte 6 versetzt zueinander angeordnet sind;
Ausrichten der Dachhakenpaare in berührender Weise aneinander; und
Verkleben der Dachhakenpaare durch zumindest partielles oder vollständiges Auftragen eines polymeren Bindemittels oder eines Klebstoffes oder eines Klebebandes in einem zwischen benachbarten Einschlagspitzen 4 gebildeten Berührungsbereich B zur Bildung des Dachhakenstreifens 5.

## Patentansprüche

1. Dachhakenstreifen (5) für ein Nagelsetzgerät, gebildet aus mehreren berührend miteinander lösbar verbundenen magazinierten Dachhaken (1), die jeweils eine Basis (2, 6) aufweisen, an deren einem Endbereich eine Aufnahme (3) zur Halterung von Dach- oder Fassadenplatten, insbesondere von Schieferplatten an einer Dachfläche ausgebildet ist, und an deren anderem Endbereich eine zu der Basis (2) abgewinkelt angeordnete Einschlagspitze (4) mit einem Einschlagabschnitt (6) und einem Schaftabschnitt (7) ausgebildet ist, wobei benachbarte Einschlagabschnitte (6) jeweils leicht versetzt zueinander angeordnet sind und wobei die Dachhaken (1) über ein polymeres Bindemittel, einen Klebstoff und/oder ein Klebeband miteinander verklebt sind, **dadurch gekennzeichnet, dass** zur Verklebung der Dachhaken (1) ein zwischen benachbarten Einschlagabschnitten (6) gebildeter Berührungsbereich (B) zumindest teilweise mit einem polymeren Bindemittel oder einem Klebstoff oder einem Klebestreifen versehen ist und insbesondere jeweils nur einer der den Berührungsbereich (B) bildenden Einschlagabschnitte (6) das polymere Bindemittel oder den Klebstoff oder den Klebestreifen aufweist.

2. Dachhakenstreifen (5) nach Anspruch 1, **dadurch gekennzeichnet, dass** die Schaftabschnitte (7) eine Ebene (E) definieren, entlang welcher die jeweilig benachbarten Einschlagabschnitte (6) versetzt zueinander angeordnet sind.

3. Dachhakenstreifen (5) nach Anspruch 2, **dadurch gekennzeichnet, dass** die Einschlagabschnitte (6) alternierend auf und unterhalb der durch die Schaftabschnitte (7) gebildeten Ebene (E) angeordnet sind oder auf und oberhalb oder alternierend oberhalb und unterhalb der Ebene (E).

4. Dachhakenstreifen (5) nach einem der vorherigen Ansprüche, **dadurch gekennzeichnet, dass** jeweils zwei benachbarte Einschlagabschnitte zwischen sich einen Winkel von 0,1° bis 10°, bevorzugt 0,5° bis 5°, noch bevorzugter 2° bis 4° einschließen.

5. Dachhakenstreifen (5) nach einem der vorhergehenden Ansprüche, **dadurch gekennzeichnet, dass** das polymere Bindemittel Füllkörper zur Erhöhung der Ausziehwerte enthält.

6. Dachhakenstreifen (5) nach Anspruch 5, **dadurch gekennzeichnet, dass** die Füllkörper partikuläre Füllkörper sind ausgewählt aus Silikapartikeln, wie pyrogener Kieselsäure oder Fällungskieselsäure, aus Glasschaumpartikeln, Sand, Ton, Kreide, Gips, Talk, Glas, Keramik, Holz, Kunststoff, insbesondere Polyvinylchlorid, oder aus Mischungen von diesen.

7. Dachhakenstreifen (5) nach Anspruch 6, **dadurch gekennzeichnet, dass** die partikulären Füllkörper eine sphärische oder hemisphärische Form aufweisen und insbesondere ausgewählt sind aus Mikrokugeln, offenen oder geschlossenen Mikrohohlkugeln, sowie Mischungen hiervon.

8. Verfahren zur Herstellung eines Dachnagelstreifens (5) zur Befestigung von Dach- oder Fassadenplatten an einem Dachfirst, nach einem der Ansprüche 1 bis 7, wobei die Dachhaken (1) jeweils einer Basis (2) aufweisen, an deren einem Endbereich eine Aufnahme (3) zur Haltung der Dach- oder Fassadenplatten, insbesondere von Schieferplatten an einer Dachfläche, und an deren anderem Endbereich eine zu der Basis (2) abgewinkelt angeordnete Einschlagspitze (4) mit einem Einschlagabschnitt (6) und einem Schaftabschnitt (7) ausgebildet sind, die Schritte umfassend:
- Ablängen mindestens zweier Drähte auf eine vorher festzulegende Gesamtlänge;
- Biegen der Drähte zu Dachhakenpaaren unter Bildung der Aufnahme (3), wobei die jeweiligen Einschlagspitzen (4) derart gebogen werden, dass zumindest deren Einschlagabschnitte (6) versetzt zueinander angeordnet sind;
- Ausrichten der Dachhakenpaare in berührender Weise aneinander; und
- Verkleben der Dachhaken (1) durch partielles Auftragen eines polymeren Bindemittels oder eines Klebstoffes oder eines Klebebandes in einem zwischen benachbarten Einschlagspitzen (4) gebildeten Berührungsbereich (B) zur Bildung des Dachhakenstreifens (5) nach einem der vorhergehenden Ansprüche.

9. Verfahren nach Anspruch 8, **dadurch gekennzeichnet, dass** jeweils mindestens zwei Dachhaken (5) gleichzeitig in einem Biegeschritt zu einem Dachhakenpaar gebogen werden.

## Claims

1. A strip of roof hooks (5) for a nail driving tool formed from a number of magazined roof hooks (1) connected detachably to one another so as to touch, which hooks each have a base (2, 6) on one end region of which a receiver (3) is formed for holding roof or cladding panels, in particular slates, on a roof surface, and on the other end region of which there is formed a drive-in tip (4) arranged at an angle to the base (2), with a drive-in section (6) and a shaft section (7), the roof hooks (1) being adhered to one another by a polymeric bonding agent, an adhesive and/or an adhesive strip, and adjacent drive-in sections (6) each being arranged slightly offset to one another, **characterised in that** in order to adhere the roof hooks (1) a contact region (B) formed between adjacent drive-in sections (6) is provided at least partially with a polymeric bonding agent or an adhesive or an adhesive strip and in particular only one of the drive-in sections (6) forming the contact region (B) respectively has the polymeric bonding agent or the adhesive or the adhesive strip.

2. The strip of roof hooks (5) according to Claim 1, **characterised in that** the shaft sections (7) define a plane (E) along which the respectively adjacent drive-in sections (6) are arranged offset to one another.

3. The strip of roof hooks (5) according to Claim 2, **characterized in that** the drive-in sections (6) are arranged alternately on and below the plane (E) defined by the shaft sections (7) or on and above or alternately above and below the plane (E).

4. The strip of roof hooks (5) according to any of the preceding claims, **characterised in that** two adjacent drive-in sections adjacent to one another respectively enclose between them an angle of 0.1° to 10°, preferably 0.5° to 5°, more preferably 2° to 4°.

5. The strip of roof hooks (5) according to any of the preceding claims, **characterised in that** the polymeric bonding agent contains filling materials in order to increase the pull-out values.

6. The strip of roof hooks (5) according to Claim 5, **characterised in that** the filling materials are particulate filling materials selected from silica particles such as pyrogenic silicic acid or precipitated silicic acid, from glass foam particles, sand, clay, chalk, gypsum, talc, ceramic, wood, plastic, in particular polyvinyl chloride, or from mixtures of the latter.

7. The strip of roof hooks (5) according to Claim 6, **characterised in that** the particulate filling materials are spherical or hemispherical in form, and in particular are selected from microspheres, open or closed hollow microspheres, and mixtures of the latter.

8. A method of producing a strip of roof hooks (5) for fastening roof or cladding panels to the ridge of a roof, in particular according to any of Claims 1 to 7, the roof hooks (1) each having a base (2) on one end region of which a receiver (3) is formed for holding the roof or cladding panels, in particular slates, on a roof surface, and on the other end region of which there is formed a drive-in tip (4) arranged at an angle to the base (2), with a drive-in section (6) and a shaft section (7), the steps comprising:
- cutting at least two wires to a previously determined overall length;
- bending the wires into pairs of roof hooks such as to form the receiver (3), the respective drive-in tips being bent such that at least their drive-in sections (6) are arranged offset to one another;
- aligning the pairs of roof hooks such as to be in contact with one another; and
- adhering the roof hooks (1) by partially applying a polymeric bonding agent or an adhesive or an adhesive strip in a contact region (B) formed between adjacent drive-in tips (4) in order to form the strip of roof hooks (5) according to any of the preceding claims.

9. The method according to Claim 8, **characterised in that** at least two roof hooks (5) are respectively bent simultaneously into a pair of roof hooks in one bending step.

## Revendications

1. Bande de crochets de toit (5) pour un appareil chasse-clou, constituée de plusieurs crochets de toit (1) emmagasinés et reliés l'un avec l'autre en contact et de manière détachable, qui présentent respectivement une base (2, 6), sur une zone d'extrémité de laquelle un support (3) est constitué en vue du maintien de plaques de toit ou de façade, notamment de plaques d'ardoise sur une surface de toit, et sur l'autre zone d'extrémité de laquelle une pointe d'enfoncement (4) disposée de manière pliée par rapport à la base (2) est constituée avec une section d'enfoncement (6) et une section de tige (7), les crochets de toit (1) étant collés l'un avec l'autre par l'intermédiaire d'un liant polymère, d'une colle et/ou d'un ruban adhésif, **caractérisée en ce que** en vue du collage des crochets de toit (1), une zone de contact (B) constituée entre des sections d'enfoncement voisines (6) est garnie au moins en partie d'un liant polymère, d'une colle ou d'une bande adhésive, et **en ce que** en particulier respectivement et seulement une des sections d'enfoncement (6) constituant la zone de contact (B) présente le liant polymère, la colle ou la bande adhésive.

2. Bande de crochets de toit (5) selon la revendication 1, **caractérisée en ce que** les sections de tige (7) définissant un plan (E), le long duquel les sections d'enfoncement voisines (6) respectives sont disposées en décalage l'une par rapport à l'autre.

3. Bande de crochets de toit (5) selon la revendication 2, **caractérisée en ce que** les sections d'enfoncement (6) sont disposées en alternance sur et au-dessus du plan (E) définit par les sections de tige (7) ou sur et au-dessus ou en alternance au-dessus et au-dessous du plan (E).

4. Bande de crochets de toit (5) selon une quelconque des revendications précédentes, **caractérisée en ce que** respectivement deux sections d'enfoncement voisines comprennent entre elles un angle de 0,1° à 10°, de préférence de 0,5° à 5°, et encore plus de préférence de 2° à 4°.

5. Bande de crochets de toit (5) selon une quelconque des revendications précédentes, **caractérisée en ce que** le liant polymère contient des corps de remplissage en vue de l'augmentation des valeurs d'extraction.

6. Bande de crochets de toit (5) selon la revendication 5, **caractérisée en ce que** les corps de remplissage sont des corps de remplissage particulaires, sélectionnés à partir des particules de silice, comme l'acide silique pyrogène ou l'acide silique précipité, à partir des particules en mousse de verre, du sable, de l'argile, de la craie, du plâtre, du talc, du verre, de la céramique, du bois, du plastique, en particulier du chlorure de polyvinyle ou de mélanges de ceux-ci.

7. Bande de crochets de toit (5) selon la revendication 6, **caractérisée en ce que** les corps de remplissage particulaires présentent une forme sphérique ou hémisphérique, et sont sélectionnés en particulier à partir des microbilles, des microbilles creuses, ouvertes ou fermées, ainsi que de mélanges de celles-ci.

8. Procédé en vue de la fabrication d'une bande de crochets de toit (5) en vue de la fixation de plaques de toit ou de façade sur un faîte, en particulier selon une quelconque des revendications 1 à 7, les crochets de toit (1) présentant respectivement une base (2), à une zone d'extrémité de laquelle un support (3) en vue du maintien des plaques de toit ou de façade, en particulier des plaques d'ardoise sur une surface de toit, et sur l'autre zone d'extrémité de laquelle une pointe d'enfoncement (4) disposée de manière pliée par rapport à la base (2) sont constituées avec une section d'enfoncement (6) et une section de tige (7), les étapes comprenant:
- le tronçonnement d'au moins deux fils sur une longueur totale à déterminer auparavant;
- la flexion des fils en des paires de crochets de couvreur pendant la constitution du support (3), les pointes d'enfoncement respectives (4) étant coudées de sorte qu'au moins leurs sections d'enfoncement (6) sont disposées en décalage l'une par rapport à l'autre;
- l'alignement des paires de crochets de toit en mode en contact l'un sur l'autre; et
- le collage des crochets de toit (1) par des applications partielles d'un liant polymère, d'une colle ou d'une bande adhésive dans une zone de contact (B) constituée entre des pointes d'enfoncement voisines (4) en vue de la constitution de la bande de crochets de couvreur (5) selon une quelconque des revendications précédentes.

9. Procédé selon la revendication 8, **caractérisé en ce que** respectivement au moins deux crochets de toit (5) sont coudés simultanément en une étape de flexion en une paire de crochets de couvreur.
